# EUROPEAN PATENT SPECIFICATION

(11) **EP 1 693 396 B1**
(45) Date of publication and mention of the grant of the patent: **22.08.2007**
(21) Application number: 04773804.2
(22) Date of filing: 14.10.2004
(51) Int. Cl.: C08G 63/181, C09J 175/06

(54) **CRYSTALLINE POLYESTER POLYOL AND HOT MELT ADHESIVE**
KRISTALLINES POLYESTERPOLYOL UND SCHMELZKLEBSTOFF
POLYOL POLYESTER CRISTALLIN ET ADHESIF THERMOFUSIBLE

(30) Priority: 11.11.2003 JP 2003381222
(43) Date of publication of application: 23.08.2006
(73) Proprietor: Ube Industries, Ltd., Ube-shi, Yamaguchi-ken 755-8633 (JP)
(72) Inventor: ICHIHASHI, Hideki c/o Ube Industries, Ltd.,, Yamaguichi 755-8633 (JP); KANEKO, Yukio c/o Ube Industries, Ltd.,, Yamaguchi 755-8633 (JP)
(74) Representative: Grünecker, Kinkeldey, Stockmair & Schwanhäusser Anwaltssozietät
(86) International application number: PCT/JP2004/015543
(87) International publication number: WO 2005/044891

(56) References cited:
- EP-A- 0 419 928
- EP-A1- 1 149 850
- WO-A-99/08901
- DE-A1- 10 028 810
- DE-A1- 10 150 722

## Description

### <Technical Field>

The present invention relates to a crystalline polyester polyol, a urethane prepolymer obtainable using the polyester polyol, and a hot-melt adhesive produced using the urethane prepolymer.

### <Background Art>

Polyesters are well known compounds in industry and various polyesters are employed. In particular, polyester polyols are capable of crosslinking and curing with various crosslinking agents such as isocyanate compounds, and are widely used as paints, adhesives, inks, and sealants.

Among them, a crystalline polyester polyol has characteristics that it can be handled as a liquid having relatively low viscosity at a temperature of the melting point or higher and it solidifies within a short period of time through recrystallization when it is cooled at or below the crystallizing temperature in addition to its excellent mechanical properties. Owing to the characteristics, its use as components for reactive hot-melt adhesives and hot melt-type ink jet inks have been expanding.

The reactive hot-melt adhesives exhibit high adhesion strength through absorption of moisture in the air and occurrence of crosslinking. Furthermore, the market of the reactive hot-melt adhesives have been rapidly growing since they match social needs of lessening solvent and saving energy together owing to its excellent adhering speed and high applicability to product lines in assembly industries. In addition, there is a strong demand for the enhancement of efficiency of continuous working, and therefore, a reactive hot-melt adhesive having more rapid setting rate (rapid setting property) is desired.

It is known, as described in Non-Patent Documents 1 and 2, that the crystallinity of a polyester polyol affects the setting rate. Namely, a polyester polyol having high crystallinity is extremely advantageous for accelerating the setting rate. For example, Patent Document 1 discloses polyester polyols wherein dodecanedioic acid and 1,6-hexanediol, decanedioic acid and 1,6-hexanediol, or dodecanedioic acid and ethylene glycol are used as raw materials for producing a reactive hot-melt adhesive having improved setting rate, and the like. However, there is a strong demand for a polyester polyol having more rapid setting property as compared with the above polyester polyols.

Furthermore, it is strongly desired that the above reactive hot-melt adhesive has high hardness immediately after solidification through cooling as well as it can be produced and used at a low temperature with high productivity and low cost and has low viscosity at melting.
[Non-Patent Document 1] "Technology on adhesion & sealing", vol. 28, No. 8, p. 5 (1984)
[Non-Patent Document 2] [ADHESIVE AGE], p. 32, November (1987)
[Patent Document 1] Japanese Patent Laid-Open No. 88686/1990

### <Disclosure of the Invention>

An object of the present invention is to provide a hot-melt adhesive capable of rapid setting, having high hardness immediately after solidification through cooling, and excellent in efficiency of working at its production and use.

The object of the invention is achieved by a crystalline polyester polyol obtainable by polycondensation of a dicarboxylic acid component comprising (1) 85 to 99 mol% of an aromatic dicarboxylic acid and (2) 15 to 1 mol% of an aliphatic dicarboxylic acid of HOOC-(CH₂)ₙ-COOH wherein n is 8 to 10 with (3) an aliphatic diol component of HO-(CH₂)ₘ-OH wherein m is 11 to 20 and a hot-melt adhesive derived therefrom. In this regard, the total of the aromatic dicarboxylic acid (1) and the aliphatic dicarboxylic acid (2) is 100 mol%.

### <Best Mode for Carrying Out the Invention>

The aromatic dicarboxylic acid (1) to be used in the invention is a compound having two carboxyl groups on an aromatic ring and specifically includes terephthalic acid, isophthalic acid, phthalic acid, 1,4-phenylenediacetic acid, 4,4'-biphenyldicarboxylic acid, 2,6-naphthalenedicarboxylic acid, and the like. Preferred is terephthalic acid or 4,4'-biphenyldicarboxylic acid and more preferred is terephthalic acid. Moreover, a diester of an aromatic dicarboxylic acid can be also used as a raw material. Preferred diester compound includes an aliphatic alcohol having 1 to 4 carbon atoms, and concretely includes dimethyl terephthalate, dimethyl isophthalate, dimethyl phthalate, diethyl terephthalate, diethyl isophthalate, or diethyl phthalate.

The aliphatic dicarboxylic acid (2) to be used in the invention is represented by HOOC-(CH₂)ₙ-COOH wherein n is 8 to 10. Concretely, the acid includes sebacic acid or dodecanedioic acid. Preferably, it is dodecanedioic acid. Moreover, a diester compound of an aliphatic dicarboxylic acid can be also used as a raw material. Concretely, it includes a dimethyl ester or diethyl ester compound.

In the case that an aliphatic dicarboxylic acid wherein n is less than 8 is used, setting time increases and hence the purpose cannot be achieved. In the case that an aliphatic dicarboxylic acid wherein n is larger than 10 is used, no particular trouble arises but it becomes difficult to obtain the acid as a raw material.

The ratio of the aromatic dicarboxylic acid (1) and the aliphatic dicarboxylic acid (2) to be used in the invention is 15 to 1 mol% of the aliphatic dicarboxylic acid relative to 85 to 99 mol% of the aromatic dicarboxylic acid, preferably 10 to 5 mol% of the aliphatic dicarboxylic acid relative to 90 to 95 mol% of the aromatic dicarboxylic acid. In this regard, the total of the aromatic dicarboxylic acid (1) and the aliphatic dicarboxylic acid (2) is 100 mol%.

When the amount of the aromatic dicarboxylic acid used is less than 85 mol%, the balance between surface hardness and setting time becomes insufficient. Moreover, the use of the aromatic dicarboxylic acid alone results in extremely bad efficiency of working.

As the aliphatic diol (3) of HO-(CH₂)ₘ-OH wherein m is 11 to 20 that is a component of the polyester polyol of the invention, 1,12-dodecanediol is concretely mentioned.

In the case that an aliphatic diol wherein m is 10 or less is used, setting time increases and hence the purpose cannot be achieved. In the case that an aliphatic diol wherein m is larger than 20 is used, no particular trouble arises but it becomes difficult to obtain the diol as a starting material.

The crystalline polyesterpolyol obtainable according to the invention can be obtained by known dehydrative polycondensation of an aromatic dicarboxylic acid (1) and an aliphatic dicarboxylic acid with an aliphatic diol to effect esterification or by known esterification of a diester compound of an aromatic dicarboxylic acid (1) and a diester compound of an aliphatic dicarboxylic acid with an aliphatic diol. In the former case, concretely, the esterification is carried out by subjecting predetermined amounts of the dicarboxylic acid and the aliphatic diol to dehydrative polycondensation in the presence or absence of a catalyst at a temperature range of about 150 to about 250°C for about 3 to about 20 hours. As the catalyst at that time, it is preferable to carry out the reaction in the presence of a titanium-based catalyst such as titanium tetrabutoxide or a tin-based catalyst such as dibutyltin oxide owing to its acceleration of the dehydrative polycondensation. On the other hand, in the latter case, concretely, the polyester polyol can be obtained by the ester exchange reaction which is carried out by subjecting predetermined amounts of dimethyl ester compound of the dicarboxylic acid and the aliphatic diol to methanol elimination in the presence of a similar esterification catalyst at a reaction temperature of 150 to 220°C for 9 hours.

The crystalline polyester polyol obtainable according to the invention preferably has a melting point of 90°C to 120°C. When the melting point is less than the range, the urethane prepolymer obtained from the polyester polyol exhibits slower setting time and thermal resistance is also poor in some cases. When it is more than the range, the tendency of remarkable decrease in efficiency of working at the production of the urethane prepolymer and at the use of the hot-melt adhesive becomes prominent.

As a physical property of the crystalline polyester polyol obtainable according to the invention, enthalpy in the crystallization measured at the cooling rate of 10°C/min using differential scanning calorimetry (DSC) is preferably 55 J/g or more. When the enthalpy is less than 55 J/g, the crystallinity remarkably decreases and retardation of setting time and decrease in surface hardness are caused in some cases.

The number average molecular weight of the polyester polyol obtainable according to the invention is not particularly limited and is 1,000 to 20,000, preferably 2,000 to 10,000. When the molecular weight is smaller than the range, thermal resistance, chemical resistance and strength at curing are not sufficient. When it is larger than the range, the viscosity at melting becomes high and therefore the handling becomes difficult in some cases.

As the polyisocyanate to be used in the invention, usually well-known aromatic, aliphatic and alicyclic diisocyanates or highly functional or polymeric polyisocyanates are used. Concrete examples include 1,5-naphthylene diisocyanate, 4,4'-diphenylmethane diisocyanate, 4,4'-diphenyldimethylmethane diisocyanate, 4,4'-dibenzyl diisocyanate, tetraalkyldiphenylmethane diisocyanate, 1,3-phenylene diisocyanate, 1,4-phenylene diisocyanate, tolylene diisocyanate, butane-1,4-diisocyanate, hexamethylene diisocyanate, 2,2,4-trimethylhexamethylene diisocyanate, 2,4,4-trimethylhexamethylene diisocyanate, cyclohexane-1,4-diisocyanate, xylylene diisocyanate, isophorone diisocyanate, dicyclohexylmethane-4,4'-diisocyanate, 1,3-bis(isocyanatomethyl)cyclohexane, methylcyclohexane diisocyanate, and derivatives thereof.

The use range of the crystalline polyester polyol and the polyisocyanate is not particularly limited, and they can be used within a usual range. Namely, the molar ratio of the OH group of the polyester polyol to the NCO group of the polyisocyanate (mol number of the OH group of the polyester polyol to mol number of the NCO group of the polyisocyanate) is from 1:1.2 to 1:3.0, preferably 1:1.5 to 1:2.5.

The reaction conditions are also not particularly limited and the reaction is carried out under the usual conditions, preferably, at 50 to 150°C for 1 to 5 hours. Also, the reaction may be carried out in an organic solvent. Concretely, methyl ethyl ketone, dimethylformamide, cyclohexanone, and the like may be mentioned.

The viscosity of the urethane prepolymer obtainable according to the invention is not particularly limited but is 100,000 mPa·s or less, preferably 10,000 to 80,000 mPa·s at 120°C.

The urethane prepolymer of the invention may be used as a hot-melt adhesive as it is, and also may be used after the addition of a plasticizer, a thermoplastic polymer, a tackifier, a filler, a stabilizer, an antioxidant, a UV absorbent, a colorant and the like which are employed for usual hot-melt adhesives.

The hot-melt adhesive obtainable according to the invention is suitable for adhesion step at continuous working process owing to its short period of time required for adhesion. For example, shoemaking industry, lumber-processing industry, paper-manufacturing industry, metal industry, and resin-processing industry may be mentioned.

### <Examples>

The following will explain the present invention concretely with reference to Examples, but the invention is not limited thereto.

### Example 1

Dimethyl terephthalate (142.8 g, 0.735 mol), dodecanedioic acid (33.5 g, 0.130 mol) and 1,12-dodecanediol (250.0 g, 1.236 mol) were charged into a 500 ml flask equipped with a distillation apparatus and the atmosphere in the flask was replaced with nitrogen. At the time when the content was melted, titanium tetrabutoxide (11.2 mg) was added thereto and stirring was carried out at 150 to 180°C for 3 hours. Thereafter, the pressure in the flask was reduced to 300 mmHg and the whole was stirred for 1 hour, followed by stirring under a pressure of 100 mmHg for 5 hours. Then, the resulting polyester polyol was taken out at 180 to 220°C under a reduced pressure of 1 mmHg. The polyester polyol was measured by the methods for measuring physical properties to be described below and the hydroxyl value and the number-average molecular weight were found to be 30 mgKOH/g and 3,700, respectively.

### Comparative Example 2

Dodecanedioic acid (185.0 g, 0.900 mol) and 1,12-dodecanediol (182.1 g, 0.803 mol) were charged into a 500 ml flask equipped with a distillation apparatus and the atmosphere in the flask was replaced with nitrogen. When the flask was heated to 160°C, water began to distill off. After stirring at 160°C for 1 hour as it was, stirring was continued at 170°C for 2 hours and at 180°C for 3 hours. Thereafter, the pressure in the flask was reduced to 100 mmHg and the whole was stirred for 1 hour, followed by stirring under a pressure of 50 mmHg for 1 hour and further under a pressure of 10 mmHg for 3 hours. After the pressure was once rendered to normal pressure, titanium tetrabutoxide (10 mg) was added thereto and then stirring was carried out again under a reduced pressure of 10 mmHg for 6 hours to complete the dehydrative polycondensation. The hydroxyl value and the molecular weight measured by the above-described methods were found to be 40 mgKOH/g and 2,800, respectively.

Results of physical properties obtained are shown in Table 1.

### Examples 2 to 3 and Comparative Examples 1, 3 to 8

In the compositional ratios shown in Table 1, various crystalline polyester polyols were synthesized in accordance with Example 1 and Comparative Example 2. Physical properties of the resulting crystalline polyester polyols are also summarized in Table 1.

**Table 1**

| Physical Properties of Crystalline Polyester polyols of Examples 1 to 3 and Comparative Examples 1 to 8 | | | | | | | | | | |
|---|---|---|---|---|---|---|---|---|---|---|
| | Dicarboxylic acid (mol%) | | | Diol (mol%) | | Physical properties of crystalline polyester polyol | | | | |
| | DDA | AA | TPA | DDL | HD | Hydroxyl value (KOHmg/g) | Number average molecular weight | Melting point (°C) | Crystallizing temperature (°C) | Crystallization enthalpy (J/g) |
| Example 1 | 15 | | 85 | 100 | | 30 | 3700 | 115 | 90 | 55.5 |
| Example 2 | 10 | | 90 | 100 | | 37 | 3000 | 116 | 94 | 58.6 |
| Example 3 | 5 | | 95 | 100 | | 30 | 3700 | 120 | 98 | 62.9 |
| Comparative Example 1 | 20 | | 80 | 100 | | 33 | 3400 | 111 | 88 | 50.9 |
| Comparative Example 2 | 100 | | | 100 | | 40 | 2800 | 81 | 69 | 131.4 |
| Comparative Example 3 | | | 100 | 100 | | 28 | 4000 | 123 | 100 | 64.8 |
| Comparative Example 4 | 10 | | 90 | | 100 | 42 | 2700 | 131 | 105 | 38.3 |
| Comparative Example 5 | 20 | | 80 | | 100 | 29 | 3900 | 119 | 85 | 32.9 |
| Comparative Example 6 | 100 | | | | 100 | 32 | 3500 | 71 | 58 | 113.5 |
| Comparative Example 7 | | 20 | 80 | | 100 | 29 | 3900 | 122 | 92 | 32.9 |
| Comparative Example 8 | | 40 | 60 | | 100 | 33 | 3400 | 95 | 65 | 21.8 |

| | | | | | | | | | | |
|---|---|---|---|---|---|---|---|---|---|---|
| DDA: dodecanedioic acid, AA: adipic acid, TPA: terephthalic acid DDL: 1,12-dodecanediol, HD: 1,6-hexanediol | | | | | | | | | | |

### EXAMPLE 4

The crystalline polyester polyol obtained in Example 1 (90.0 g) was placed in a 300 ml separable flask and, after the replacement with nitrogen, the whole was heated to melt at 120°C. Then, 1/10N toluene solution of dibutyl phosphate was added in a molar amount of 1.2 times larger than that of titanium tetrabutoxide used in the polyester polyol synthesis, followed by stirring at 130°C for 2 hours. Thereafter, a urethane prepolymer was synthesized by dehydration treatment at 120°C at 50 mmHg for 1 hour under stirring at 250 rpm, replacement with nitrogen for 10 minutes, addition of 4,4'-diphenylmethane diisocyanate (referred to as MDI) heated to 60°C in advance (2.2 molar equivalents is used relative to the polyester polyol) all at once, and stirring at 120°C for further 1.5 hours under a nitrogen atmosphere. With regard to the resulting urethane prepolymer, physical properties (melt viscosity, melting point, crystallizing temperature, and crystallization enthalpy) are summarized in Table 2. Furthermore, results of setting time, hardness immediately after solidification through cooling, and efficiency of working in the case that it was used as a hot-melt adhesive as it was are shown in Table 3.

### Examples 5 to 6 and Comparative Examples 9 to 16

Using the polyester polyols synthesized in Examples 2 to 3 and Comparative Examples 1 to 8, urethane prepolymers and adhesives were synthesized in accordance with Example 4. Physical properties of the resulting urethane prepolymers and adhesives are summarized in Table 2 and Table 3.

**Table 2**

| Physical Properties of urethane prepolymers of Examples 4 to 6 and Comparative Examples 9 to 16 | | | | | | | | | |
|---|---|---|---|---|---|---|---|---|---|
| | Dicarboxylic acid (mol%) | | | Diol (mol%) | | Physical properties of urethane prepolymer | | | |
| | DDA | AA | TPA | DDL | HD | Viscosity (120°C) (mPa·s) | Melting point (°C) | Crystallizing temperature (°C) | Crystallization Enthalpy (J/g) |
| Example 4 | 15 | | 85 | 100 | | 43600 | 110 | 80 | 44.5 |
| Example 5 | 10 | | 90 | 100 | | 24800 | 112 | 82 | 45.9 |
| Example 6 | 5 | | 95 | 100 | | 76800 | 115 | 86 | 48.2 |
| Comparative Example 9 | 20 | | 80 | 100 | | 32400 | 106 | 77 | 44.2 |
| Comparative Example 10 | 100 | | | 100 | | 4400 | 74 | 60 | 89.1 |
| Comparative Example 11 | | | 100 | 100 | | 48000*1 | 120 | 93 | 50.7 |
| Comparative Example 12 | 10 | | 90 | | 100 | 22000*1 | 122 | 84 | 29.5 |
| Comparative Example 13 | 20 | | 80 | | 100 | 127200 | 113 | 73 | 26.9 |
| Comparative Example 14 | 100 | | | | 100 | 6000 | 65 | 52 | 80.5 |
| Comparative Example 15 | | 20 | 80 | | 100 | 28400*1 | 114 | 74 | 27.6 |
| Comparative Example 16 | | 40 | 60 | | 100 | 22000 | 87 | 26 | 31.1 |

| | | | | | | | | | |
|---|---|---|---|---|---|---|---|---|---|
| DDA: dodecanedioic acid, AA: adipic acid, TPA: terephthalic acid DDL: 1,12-dodecanediol, HD: 1,6-hexanediol *1 Melt viscosity at 140°C, partially solidified at 120°C | | | | | | | | | |

**Table 3**

| Characteristics of hot-melt adhesive using urethane prepolymer | | | | | | | | |
|---|---|---|---|---|---|---|---|---|
| | Dicarboxylic acid (mol%) | | | Diol (mol%) | | Characteristics of hot-melt adhesive | | |
| | DDA | AA | TPA | DDL | HD | Setting time (second) | Hardness Shore D | Efficiency of working |
| Example 4 | 15 | | 85 | 100 | | 5 | 44 | ○ |
| Example 5 | 10 | | 90 | 100 | | 3 | 45 | ○ |
| Example 6 | 5 | | 95 | 100 | | 3 to 4 | 51 | ○ |
| Comparative Example 9 | 20 | | 80 | 100 | | 5 to 6 | 41 | ○ |
| Comparative Example 10 | 100 | | | 100 | | 8 to 10 | 50 | ○ |
| Comparative Example 11 | | | 100 | 100 | | 3 to 4 | 53 | × |
| Comparative Example 12 | 10 | | 90 | | 100 | 20 | 45 | × |
| Comparative Example 13 | 20 | | 80 | | 100 | 12 to 13 | 40 | Δ |
| Comparative Example 14 | 100 | | | | 100 | 15 | 46 | ○ |
| Comparative Example 25 | | 20 | 80 | | 100 | 110 | 45 | Δ |
| Comparative Example 16 | | 40 | 60 | | 100 | 150 | 33 | ○ |

| | | | | | | | | |
|---|---|---|---|---|---|---|---|---|
| DDA: dodecanedioic acid, AA: adipic acid, TPA: terephthalic acid DDL: 1,12-dodecanediol, HD: 1,6-hexanediol | | | | | | | | |

As shown in Table 3, the urethane prepolymers obtained according to the invention (Examples 4 to 6) have rapid setting property,high hardness, and excellent efficiency of working as hot-melt adhesives.

On the other hand, when terephthalic acid is less than 85 mol% (Comparative Example 9), setting time is short and efficiency of working is excellent but surface hardness decreases. Moreover, the urethane prepolymer obtainable from a polyester polyol comprising no terephthalic acid (Comparative Example 10) exhibits prolonged setting time. Furthermore, the urethane prepolymer obtainable from a polyester polyol comprising no dodecanedioic acid (Comparative Example 11) exhibits short setting time and sufficient surface hardness but efficiency of working remarkably decreases owing to too high viscosity at melting. In the case that adipic acid is used as the aliphatic dicarboxylic acid or 1,6-hexanediol is used as the aliphatic diol (Comparative Examples 12 to 16), setting time is prolonged.

The measuring methods of physical properties are as follows:

### (1) Hydroxyl value and number average molecular weight

The hydroxyl value of the polyester polyol was measured in accordance with JIS K 1557, and the number average molecular weight was calculated from the hydroxyl value.

### (2) Setting time

A urethane prepolymer melted at 120 to 150°C was applied on an aluminum plate having a thickness of 1.6 mm so as to result in a coating having a diameter of 20 mm and a thickness of 2 mm, which was covered with a similar aluminum plate. The whole was pressed and the time required for setting was measured. The experiment was carried out at the room temperature of 23°C.

### (3) Hardness

A press-sheet having a size of 100 mm × 100 mm and a thickness of 1 mm was prepared and hardness was measured after 10 minutes using a Shore D hardness tester.

### (4) Efficiency of working

The efficiency of working herein means easiness of handling at the production and use of the urethane prepolymer. Namely, the fact that the urethane prepolymer can be produced and used at a low temperature and melt viscosity at that time is low results in high productivity and low cost. Therefore, as a criterion of judgment, the melting point and melt viscosity of each urethane prepolymer were compared.

The urethane prepolymer having a melting point of 115°C or lower and a melt viscosity at 120°C of 80,000 mPa·s or less was marked ○, one wherein either the melting point or the melt viscosity was within the above range was marked Δ, and one wherein both of the melting point and the melt viscosity were out of the above range was marked ×. However, one which was not completely melted at 120°C in the viscosity measurement was also regarded as one wherein the melting point was out of the range.

### (5) Melting point, crystallizing temperature and crystallization enthalpy

The melting point, crystallizing temperature and crystallization enthalpy of each of the polyester polyols and the urethane prepolymers were represented by endothermic peak/exothermic peak temperatures when they were elevated/cooled at the elevation/cooling rate of 10°C/minute using a differential scanning calorimeter (DSC) manufactured by Parkin Elmer.

### (6) Viscosity measurement

It was measured by BH type viscosimeter, rotor No. 7 (φ 3.175 mm, L = 50 mm) at a rotation number of 10 rpm and a temperature of 120°C or 140°C.

While the invention has been described in detail and with reference to specific embodiments thereof, it will be apparent to one skilled in the art that various changes and modifications can be made therein without departing from the spirit and scope thereof.

This application is based on Japanese Patent Application (Application No. 2003-381222) filed on November 11, 2003, the contents thereof being hereby incorporated by reference.

### <Industrial Applicability>

According to the invention, a hot-melt adhesive capable of rapid setting, having high hardness and excellent in efficiency of working at its production and use can be provided.

## Claims

1. A crystalline polyester polyol obtainable by polycondensation of:
a dicarboxylic acid component comprising
(1) 85 to 99 mol% of an aromatic dicarboxylic acid and
(2) 15 to 1 mol% of an aliphatic dicarboxylic acid of HOOC-(CH₂)ₙ-COOH wherein n is 8 to 10, with
(3) an aliphatic diol component of HO-(CH₂)ₘ-OH wherein m is 11 to 20.

2. The crystalline polyester polyol according to claim 1, wherein the aliphatic dicarboxylic acid (2) is dodecanedioic acid and the aliphatic diol (3) is 1,12-dodecanediol.

3. The crystalline polyester polyol according to any one of claims 1 and 2, which has a melting point of 90°C to 120°C.

4. The crystalline polyester polyol according to any one of claims 1 to 3, wherein enthalpy at crystallization on differential scanning calorimetry (DSC) is 55 J/g or more.

5. The crystalline polyester polyol according to any one of claims 1 to 4, wherein number average molecular weight is 1,000 to 20,000.

6. A urethane prepolymer obtainable by reacting the crystalline polyester polyol according to any one of claims 1 to 5 with a polyisocyanate.

7. A hot-melt adhesive wherein the urethane prepolymer according to claim 6 is used.

## Patentansprüche

1. Kristallines Polyesterpolyol, erhältlich durch Polykondensation
einer Dicarbonsäurekomponente, umfassend
(1) 85 bis 99 mol% einer aromatischen Dicarbonsäure
und
(2) 15 bis 1 mol% einer aliphatischen Dicarbonsäure HOOC-(CH₂)ₙ-COOH, worin n 8 bis 10 ist,
mit
(3) einer aliphatischen Diolkomponente HO-(CH₂)ₘ-OH, worin m 11 bis 20 ist.

2. Kristallines Polyesterpolyol gemäß Anspruch 1, worin die aliphatische Dicarbonsäure (2) Dodecandisäure ist und das aliphatische Diol (3) 1,12-Dodecandiol ist.

3. Kristallines Polyesterpolyol gemäß Anspruch 1 oder 2, das einen Schmelzpunkt von 90°C bis 120°C hat.

4. Kristallines Polyesterpolyol gemäß einem der Ansprüche 1 bis 3, worin die Kristallisationsenthalpie bei Differenzialabtastkalorimetrie (DSC) 55 J/g oder mehr beträgt.

5. Kristallines Polyesterpolyol gemäß einem der Ansprüche 1 bis 4, worin das Molekulargewicht-Zahlenmittel 1000 bis 20000 beträgt.

6. Urethan-Vorpolymer, erhältlich durch Umsetzen des kristallinen Polyesterpolyols gemäß einem der Ansprüche 1 bis 5 mit einem Polyisocyanat.

7. Heißschmelzklebstoff, worin das Urethan-Vorpolymer gemäß Anspruch 6 verwendet wird.

## Revendications

1. Polyol de polyester cristallin pouvant être obtenu par polycondensation :
d'un composant de type acide dicarboxylique comprenant :
(1) de 85 à 99 % en moles d'un acide dicarboxylique aromatique et
(2) de 15 à 1 % en moles d'un acide dicarboxylique aliphatique de HOOC-(CH₂)ₙ-COOH, où n est de 8 à 10, avec
(3) un composant de type diol aliphatique de HO-(CH₂)ₘ-OH, où m est de 11 à 20.

2. Polyol de polyester cristallin selon la revendication 1, dans lequel l'acide dicarboxylique aliphatique (2) est l'acide dodécane dioïque et le diol aliphatique (3) est le 1,12-dodécane diol.

3. Polyol de polyester cristallin selon l'une quelconque des revendications 1 et 2, qui a un point de fusion de 90 °C à 120 °C.

4. Polyol de polyester cristallin selon l'une quelconque des revendications 1 à 3, dans lequel l'enthalpie de cristallisation par calorimétrie différentielle à balayage (DSC) est de 55 J / g ou plus.

5. Polyol de polyester cristallin selon l'une quelconque des revendications 1 à 4, dans lequel le poids moléculaire moyen en nombre est de 1 000 à 20 000.

6. Prépolymère d'uréthanne pouvant être obtenu en faisant réagir le polyol de polyester cristallin selon l'une quelconque des revendications 1 à 5 avec un polyisocyanate.

7. Adhésif thermofusible dans lequel le prépolymère d'uréthanne selon la revendication 6 est utilisé.
